# EUROPÄISCHE PATENTSCHRIFT

(11) **EP 1 080 636 B1**
(45) Veröffentlichungstag und Bekanntmachung des Hinweises auf die Patenterteilung: **28.01.2004**
(21) Anmeldenummer: 00116519.0
(22) Anmeldetag: 01.08.2000
(51) Int. Cl.: A01K 5/02

(54) **Verfahren zur Flüssigfütterung von Schweinen**
Liquid feeding for pigs
Méthode d'approvisionement de nourriture liquide pour porcs

(30) Priorität: 03.08.1999 DE 29913223 U
(43) Veröffentlichungstag der Anmeldung: 07.03.2001
(73) Patentinhaber: HAAKE, Hinrich, 22926 Ahrensburg (DE)
(72) Erfinder: HAAKE, Hinrich, 22926 Ahrensburg (DE)
(74) Vertreter: DIEHL GLAESER HILTL & PARTNER

(56) Entgegenhaltungen:
- EP-A- 0 544 640
- EP-A- 0 659 337
- EP-A- 0 765 600
- DE-A- 19 623 356

## Beschreibung

Die Erfindung bezieht sich auf ein Verfahren zur Flüssigfütterung von Schweinen, die über eine größere Anzahl räumlich voneinander getrennter Futterstellen versorgt werden, wozu eine zentrale Wiege-, Dosier- und Mischeinrichtung für die einzelnen Komponenten des Futters und eine Verteileinrichtung mit einer Mehrzahl von Abzweigleitungen eingesetzt werden, die zu den einzelnen Futterstellen führen, wobei an der Verteileinrichtung für jede Abzweigleitung ein gesteuertes Absperrventil vorgesehen ist.

Zur Flüssigfütterung von Schweinen, die über eine größere Anzahl räumlich voneinander getrennter Futterstellen versorgt werden, worden eine zentrale Wiege-, Dosier- und Mischeinrichtung für die einzelnen Komponenten des Futters und eine Verteileinrichtung mit einer Mehrzahl von Leitungen eingesetzt, die zu den einzelnen Futterstellen führen.

Derartige Vorrichtungen sind bekannt (EP 0 659 337, EP 0 765 600, EP 0 544 640).

Es ist bislang üblich (EP 696 420 A1) in einem Mischbehälter die einzelnen trockenen Komponenten eines Futtergemisches einzubringen und zu mischen. Nach Fertigstellung der Futtermischung wird das trockene Futter mittels der zugehörigen Flüssigkeit unter Druck in eine Verteilerstelle gegeben, von der aus einzelne Leitungen zu den Futterstellen führen. Damit die ankommende Futtermenge in den zugehörigen Trog gelangt, muss dort ein entsprechendes Ventil angesteuert und geöffnet und nach Abgabe des Futters wieder geschlossen werden. Derartige Anlagen weisen erhebliche Nachteile auf.

Da der Mischvorgang ohne Zuhilfenahme der zugehörigen Flüssigkeit durchgeführt wird, gestaltet er sich vergleichsweise schwierig. Ein Mischvorgang über die zugehörige Flüssigkeit, bei der es sich um Wasser, Molke oder dergl. handeln kann, wäre einfacher zu realisieren und würde schneller zu einer fertigen Mischung führen, jedoch ist bei diesem Verfahren nicht sichergestellt, dass das speziell zusammengesetzte Futter auch an die richtig Futterstelle gelangt. Die Futterzusammensetzungen sind aus verschiedenen Gründen unterschiedlich, wobei insbesondere das Alter der Tiere hier eine besondere Rolle spielt.

Der Transport von Flüssigkeitsmengen, und zwar von kleineren Flüssigkeitsmengen an großflächig verteilte Futterstellen ist aber auch aus anderer Sicht problematisch. Die einzelnen Ventile, die an der Futterstelle selbst angesteuert werden müssen, müssen sowohl über eine Druckluftversorgung als auch über eine Datenleitung verfügen, da nur so sichergestellt werden kann, dass zum richtigen Zeitpunkt und für die richtige Zeitspanne das entsprechende Ventil geöffnet und dies auch gemeldet wird.

Bei modernen Aufzuchtverfahren ist es üblich, dass der Stall für die Schweine, selbst im Winter, niedrige Temperaturen annehmen kann, so dass Einfrierungen in der Leitung und an dem Ventil auftreten können. Dies führt sehr schnell zu Störungen und bedingt, dass Service-Personal sich vor Ort ein Bild über die zu treffenden Abhilfemaßnahmen machen muss, z. B. wenn eine Meldeleitung das Signal gibt, dass eine Leitung eingefroren ist oder ein Ventil sich nicht mehr öffnen oder schließen lässt.

Die vorliegende Erfindung will ein Verfahren der eingangs genannten Art so ausgestalten, dass einerseits modernste Aufzuchtverfahren durchgeführt werden können, andererseits aber auch Anlagen entstehen, die an Betriebssicherheit nicht zu übertreffen sind.

Erreicht wird dies durch die in den Ansprüchen angegebenen Merkmale, zu denen im einzelnen noch folgendes zu sagen ist:

Das Futter wird zunächst einmal in dem Mischbehälter zusammen mit der Flüssigkeit gemischt, wobei der Mischvorgang durch Einleitung von Druckluft zusätzlich verstärkt wird. Die aufbereitete Futtermittelmenge kann aus dem Mischbehälter abgezogen werden und über das in der Verteileinrichtung vorgesehene Ventil gelangt diese Futtermittelmenge über eine Hauptleitung zur Abzweigleitung der entsprechenden Futterstelle, und zwar direkt in den Trog, da sich vor Ort kein weiteres Sperrventil mehr befindet. Am Abzweig von der Hauptleitung befindet sich kein Kugelhahn - wie bislang üblich - sondern lediglich ein T-Stück mit einem Ventil. Wenn dieses Ventil geöffnet wird, gelangt das Futter durch den anstehenden Druck direkt in den Trog. Die Druckluft kann dabei solange anstehen bleiben bis sichergestellt ist, dass auch relativ lange Leitungen freigeblasen worden sind. Damit das Futter zu dem gewünschten Abzweig gelangt, wird die Hauptleitung vom entgegengesetzten Ende her unter Druckluft gehalten.

Die Verteileinrichtung der einzelnen Ventile befindet sich in einer Umgebung, die frostfrei ist. Darüber hinaus wird durch den Einsatz von Druckluft erreicht, dass die Hauptleitung, die Ventile und die Abzweige von Flüssigkeiten freigeblasen werden. Auf diese Art und Weise treten die Probleme, die sonst mit niedrigen Temperaturen verbunden sind, nicht auf.

Bei einer bevorzugten Ausführungsform wird entweder der Mischbehälter zweiteilig ausgeführt oder es existieren zwei derartige Mischbehälter, so dass im Wechsel der eine Mischbehälter im Mischbetrieb arbeitet, während aus dem anderen gerade eine Futtermittelmenge zu einer bestimmten Futterstelle transportiert wird.

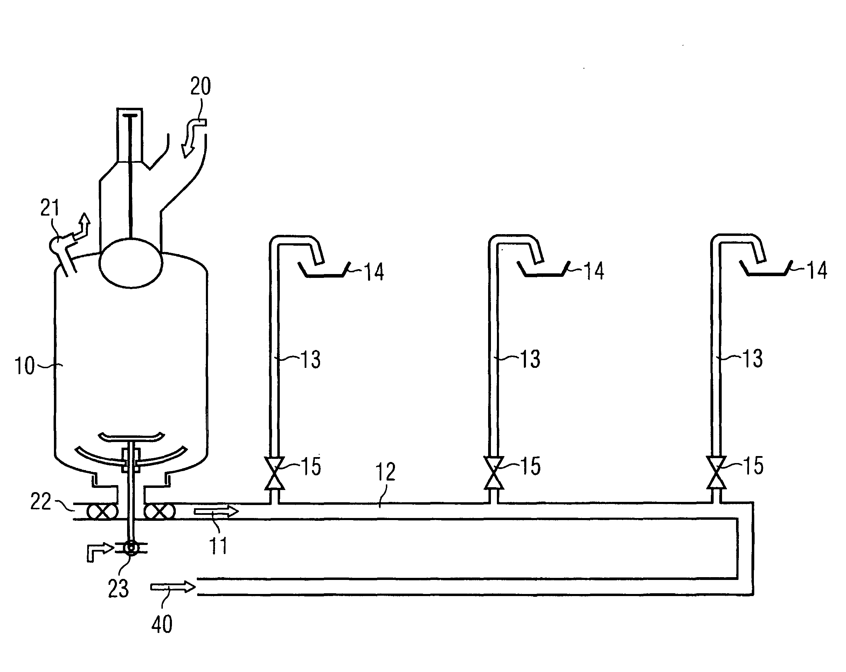

Die Erfindung wird nachstehend anhand der Zeichnung beispielsweise erläutert.

Die einzige Figur der Zeichnung zeigt eine schaubildlich eine Vorrichtung zur Flüssigfütterung von Schweinen zur Durchführung des Verfahrens gemäß der Erfindung.

Der Mischbehälter der Wiege-, Dosier- und Mischeinrichtung ist mit 10 bezeichnet worden, in ihn werden die einzelnen Trockenfutterkomponenten eingegeben und in ihn kann auch zu Förder- und Reinigungszwecken von oben her Druckluft 20 eingelassen werden bzw. eine Entlüftungseinrichtung 21 vorgesehen sein.

Im unteren Bereich kann in den Behälter 10 auch Molke oder eine andere Flüssigkeit 22 eingegeben und auch Druckluft 23 eingeleitet werden, um den Mischvorgang durchzuführen. Vergleicht man den Behälter 10 mit konventionellen Behältern, so fällt auf, dass dieser deutlich kleiner ausgestaltet werden kann, was auch auf die besondere hohe Effizienz des Mischvorganges zurückzuführen ist.

Aus dem unteren Bereich des Behälters 10 gelangt über eine Zuleitung 11 das aufbereitete Futter zu einer Verteilereinrichtung 12, wobei in der Zeichnung lediglich drei abgehende Leitungen 13 gezeichnet sind, die zu den einzelnen Futterstellen 14 führen.

In der Figur nicht gezeigt ist die erforderliche Steuerung, die über einen Rechner durchgeführt wird und die nicht nur den Wiege-, Dosier- und Mischvorgang kontrolliert sondern auch die Ventile 15 in der Verteilereinrichtung 12 ansteuert. Es ist ersichtlich, dass die abgehenden Leitungen 13 zu den einzelnen Futterstellen in ihrem Durchmesser relativ klein sind, da mittels Druckluft die Futtermenge durch die Leitung zuverlässig hindurchgedrückt wird, und zwar so, dass nach Ausgabe der entsprechenden Futtermittelmenge die Leitung vollkommen frei von Flüssigkeit gemacht wird. Die Versorgung mit Druckluft ist unproblematisch und selbst Drücke im Bereich von 8 bis 15 Atmosphärenüberdruck lassen sich über Kunststoffrohre bewältigen.

Soll beispielsweise zu der mittleren Futterstelle 14 in der Figur eine speziell angemischte Futtermenge geliefert werden, so wird diese Futtermittelmenge aus dem Mischbehälter 10 herausgenommen, indem Druckluft 20 bzw. 22 dafür sorgt, dass diese Futtermittelmenge 11 in die Hauptleitung 12 gedrückt wird. An und für sich könnte diese Futtermittelmenge nun sich frei in der Hauptleitung 12 ausbreiten, was jedoch nicht erwünscht ist.

Daher wird vom anderen Ende der Hauptleitung 12 her bei 40 Druckluft eingeleitet, und zwar soviel und so gesteuert, dass das Futter zum Abzweig 13 in der Mitte der Figur gelangt. Das Ventil 15 wird dort geöffnet, so dass das Futter in den Trog 14 gegeben wird. Ist dieser Futtermittelpfropf in den Trog 14 ausgegeben worden, so wird die Druckluft 22 und 40 über das Ventil 15 und die Leitung 13 weiterhin ausströmen und dafür sorgen, dass weder in der Hauptleitung 12 noch im Ventil 14 noch in der Leitung 13 Flüssigkeitsreste verbleiben. Dies bedeutet, dass bei einer Vorrichtung gemäß der Erfindung selbst dann keine Schäden durch Frost eintreten können, wenn beispielsweise das Ventil 15 in der Abzweigleitung 13 in einem Temperaturbereich unter 0°C betrieben wird.

## Patentansprüche

1. Verfahren zur Flüssigfütterung von Schweinen, die über eine größere Anzahl räumlich voneinander getrennter Futterstellen versorgt werden, wozu eine zentrale Wiege-, Dosier- und Mischeinrichtung für die einzelnen Komponenten des Futters und eine Verteileinrichtung mit einer Mehrzahl von Abzweigleitungen eingesetzt wird, die zu den einzelnen Futterstellen führen, wobei an der Verteileinrichtung für jede Abzweigleitung ein gesteuertes Absperrventil vorgesehen ist **dadurch gekennzeichnet, dass** Druckluft (23, 22) entweder in die Mischeinrichtung zur Verstärkung des Mischvorgangs oder in die Verteileinrichtung eingeleitet wird; die fertig aufbereitete Futtermenge über das entsprechend geöffnete Absperrventil mittels Druckluft zur zugehörigen Futterstelle (14) geblasen wird und dass Druckluft in die Verteileinrichtung bzw. die Hauptleitung an deren anderem Ende eingeleitet wird, damit die Futtermittelmenge zu dem gewünschten Abzweig (15) gelangt.

2. Verfahren nach Anspruch 1, **dadurch gekennzeichnet, dass** zwei Wiege-, Dosier- und Mischeinrichtungen (10) eingesetzt werden, die wechselweise so geschaltet werden, dass in der einen eine Futtermenge aufbereitet wird, während aus der anderen eine fertiggestellte Futtermenge zu einer bestimmten Futtermittelstelle geblasen wird.

3. Verfahren nach einem der Ansprüche 1 oder 2, **dadurch gekennzeichnet, dass** die Flüssigfütterung oder die als Ringleitung ausgebildet Verteileinrichtung bzw. Hauptleitung (12) ausgeführt wird.

## Claims

1. Method for liquid feeding of pigs, which are fed through a larger number of feeding places spatially separated from each other, for which purpose a central weighing, metering and mixing device for the individual components of the feed and a distributing device having a plurality of branch lines leading to the individual feeding places are used, wherein a controlled check valve is provided on the distributing device for each branch line; **characterised in that** pressurised air (23, 22) is introduced either into the mixing device in order to intensify the mixing process or into the distributing device; that the ready-prepared feed quantity is blown through the correspondingly opened check valve by means of pressurised air to the associated feeding place (14), and that pressurised air is introduced into the distributing device and the main line, respectively, at the other end thereof, such that the animal feed quantity is conveyed to the desired branch (15).

2. Method according to claim 1, **characterised in that** two weighing, metering and mixing devices (10) are employed, which are alternately switched such that a feed quantity is prepared in the one of them, while a ready-prepared feed quantity is blown to a certain animal feeding place from the other one.

3. Method according to one of the claims 1 or 2, **characterised in that** the liquid feeding is carried out through the distributing device or main line (12) formed as a ring line.

## Revendications

1. Procédé d'alimentation liquide de porcs, qui sont soignés par l'intermédiaire d'un grand nombre de postes d'alimentation séparés les uns des autres dans l'espace, un dispositif central de balance, de dosage et de mélange pour les composants individuels de la nourriture et un dispositif de répartition avec une pluralité de lignes de d'embranchement sont utilisées, qui conduisent à chaque poste d'alimentation, moyennant quoi une soupape d'arrêt commandée est prévue au niveau du dispositif de répartition pour chaque ligne d'embranchement, **caractérisé en ce que** de l'air comprimé (23, 22) est introduit soit dans le dispositif de mélange afin de renforcer le processus de mélange, soit dans le dispositif de répartition ; la quantité de nourriture préparée est soufflée jusqu'au poste de nourriture correspondant (14) à travers la soupape d'arrêt ouverte de manière appropriée à par l'air comprimé et l'air comprimé est introduit dans le dispositif de répartition et/ou la conduite principale à son autre extrémité, afin que la quantité de nourriture atteigne l'embranchement (15) souhaité.

2. Procédé selon la,revendication 1, **caractérisé en ce que** deux dispositifs de balance, de dosage et de mélange (10) sont utilisés, qui sont connectés à tour de rôle de sorte qu'une quantité de nourriture soit préparée dans l'un pendant qu'une quantité de nourriture préparée est soufflée de l'autre vers un poste d'alimentation déterminé.

3. Procédé selon l'une des revendications 1 ou 2,
**caractérisée en ce que** l'alimentation liquide est exécutée par l'intermédiaire du dispositif de répartition et/ou de la conduite principale (12), conçus comme une conduite circulaire.
